# EUROPEAN PATENT APPLICATION

(11) **EP 2 916 516 A1**
(43) Date of publication of application: **09.09.2015**
(21) Application number: 15155522.4
(22) Date of filing: 18.02.2015
(51) Int. Cl.: H04L 29/06

(54) **Packet processing method and apparatus**

(30) Priority: 04.03.2014 CN 201410076738
(71) Applicant: Huawei Technologies Co., Ltd., Longgang District Shenzhen, Guangdong 518129 (CN)
(72) Inventor: Yu, Jingzhou, 518129 Shenzhen (CN); Song, Jian, 518129 Shenzhen (CN)
(74) Representative: Goddar, Heinz J.

(57) **Abstract**

Embodiments of the present invention disclose a packet processing method and apparatus. A data format of a packet does not need to be understood before the packet is processed, which features high flexibility and commonality and facilitates rapid deployment of a new service. The method includes: acquiring, by a central processing unit CPU, a location parameter of a key and an identifier of a flow table, where the location parameter of the key is used to indicate a location of the key in a packet; acquiring, by the CPU, the key from the packet according to the location parameter of the key; searching, by the CPU according to the key and the identifier of the flow table, the flow table for a flow table entry that matches the key; and processing, by the CPU, the packet according to the flow table entry.

## Description

### TECHNICAL FIELD

Embodiments of the present invention relate to communications technologies, and in particular, to a packet processing method and apparatus.

### BACKGROUND

In the prior art, after receiving a packet, a forwarder needs to determine a data format of the packet, for example, the forwarder determines whether the packet is an Internet Protocol (Internet Protocol, IP for short) data packet or a Multiple Protocol Label Switching (Multiple protocol Label Switching, MPLS for short) packet, so as to perform processing on the packet according to the protocol. For example, after receiving an Ethernet frame, a switch needs to determine, according to a port table, that a protocol of the Ethernet frame is the Media Access Control (Media Access Control, MAC for short) protocol. Then, the switch performs parsing on a MAC protocol header of the Ethernet frame according to the MAC protocol, so as to acquire a destination MAC protocol address of the Ethernet frame.

### SUMMARY

In view of this, embodiments of the present invention provide a packet processing method and apparatus. A data format of a packet does not need to be understood before the packet is processed. The foregoing technical solutions feature high flexibility and commonality and facilitate rapid deployment of a new service.

The technical solutions provided in the embodiments of the present invention are as follows.

According to a first aspect, a packet processing method is provided, including:
acquiring, by a central processing unit (central processing unit, CPU for short), a location parameter of a key (key) and an identifier of a flow table (flow table), where the location parameter of the key is used to indicate a location of the key in a packet;
acquiring, by the CPU, the key from the packet according to the location parameter of the key;
searching, by the CPU according to the key and the identifier of the flow
table, the flow table for a flow table entry that matches the key; and
processing, by the CPU, the packet according to the flow table entry.

In a first possible implementation manner of the first aspect, the location parameter of the key includes a first parameter and a second parameter, where
the first parameter is an offset (offset) between a start bit of the key and a header of the packet, and the second parameter is an offset between an end bit of the key and the header of the packet; or
the first parameter is an offset between a start bit of the key and a header of the packet, and the second parameter is a length (length) of the key; or
the first parameter is an offset between an end bit of the key and a header of the packet, and the second parameter is a length of the key.

According to a second aspect, a packet processing apparatus is provided, including a first virtual machine, where:
the first virtual machine includes:
   a first acquiring unit, configured to acquire a location parameter of a first key and an identifier of a first flow table, where the location parameter of the first key is used to indicate a location of the first key in a packet;
   a second acquiring unit, configured to acquire the first key from the packet according to the location parameter that is of the first key and that is acquired by the first acquiring unit;
   a first searching unit, configured to search, according to the first key acquired by the second acquiring unit and the identifier that is of the first flow table and that is acquired by the first acquiring unit, the first flow table for a flow table entry that matches the first key; and
   a first processing unit, configured to process the packet according to the flow table entry that is in the first flow table and that is found by the first searching unit, so as to obtain a first packet.

In a first possible implementation manner of the second aspect, the location parameter of the first key includes a first parameter and a second parameter, where
the first parameter is an offset between a start bit of the first key and a header of the packet, and the second parameter is an offset between an end bit of the first key and the header of the packet; or
the first parameter is an offset between a start bit of the first key and a header of the packet, and the second parameter is a length of the first key; or
the first parameter is an offset between an end bit of the first key and a header of the packet, and the second parameter is a length of the first key.

With reference to the second aspect or the first possible implementation manner of the second aspect, a second possible implementation manner of the second aspect is further provided, and the apparatus includes a second virtual machine, where
the first processing unit is specifically configured to execute an operation of outputting the first packet to the second virtual machine and an operation of outputting a GOTO_TABLE GOTO_TABLE instruction to the second virtual machine, where the GOTO_TABLE instruction includes an identifier of a second flow table; and
the second virtual machine includes a receiving unit which is configured to receive the first packet and the GOTO_TABLE instruction that are output by the first virtual machine.

With reference to the second possible implementation manner of the second aspect, a third possible implementation manner of the second aspect is further provided, and the apparatus includes:
a third acquiring unit, configured to: acquire a location parameter of a second key, and acquire the identifier of the second flow table from the GOTO_TABLE instruction, where the location parameter of the second key is used to indicate a location of the second key in the packet;
a fourth acquiring unit, configured to acquire, according to the location parameter that is of the second key and that is acquired by the third acquiring unit, the second key from the first packet received by the receiving unit;
a second searching unit, configured to search, according to the second key acquired by the fourth acquiring unit and the identifier that is of the second flow table and that is acquired by the third acquiring unit, the second flow table for a flow table entry that matches the second key; and
a second processing unit, configured to process the first packet according to the flow table entry that is in the second flow table and that is found by the second searching unit.

With reference to the third possible implementation manner of the second aspect, a fourth possible implementation manner of the second aspect is further provided, where the location parameter of the second key includes a third parameter and a fourth parameter, where
the third parameter is an offset between a start bit of the second key and the header of the packet, and the fourth parameter is an offset between an end bit of the second key and the header of the packet; or
the third parameter is an offset between a start bit of the second key and the header of the packet, and the fourth parameter is a length of the second key; or
the third parameter is an offset between an end bit of the second key and the header of the packet, and the fourth parameter is a length of the second key.

According to a third aspect, a CPU is provided, including:
a first acquiring unit, configured to acquire a location parameter of a key and an identifier of a flow table, where the location parameter of the key is used to indicate a location of the key in a packet;
a second acquiring unit, configured to acquire the key from the packet according to the location parameter that is of the key and that is acquired by the first acquiring unit;
a searching unit, configured to search, according to the key acquired by the second acquiring unit and the identifier that is of the flow table and that is acquired by the first acquiring unit, the flow table for a flow table entry that matches the key; and
a processing unit, configured to process the packet according to the flow table entry found by the searching unit.

In a first possible implementation manner of the third aspect, the location parameter of the key includes a first parameter and a second parameter, where
the first parameter is an offset between a start bit of the key and a header of the packet, and the second parameter is an offset between an end bit of the key and the header of the packet; or
the first parameter is an offset between a start bit of the key and a header of the packet, and the second parameter is a length of the key; or
the first parameter is an offset between an end bit of the key and a header of the packet, and the second parameter is a length of the key.

According to the foregoing technical solutions, a CPU may acquire a key from a packet by using a location parameter of the key, the CPU searches, by using the key, a flow table corresponding to an identifier of the flow table, so as to determine a flow table entry used for processing the packet, and the CPU processes the packet by using the flow table entry. In the foregoing technical solutions, the CPU does not need to identify a format used by the packet; therefore, the foregoing technical solutions feature high flexibility and commonality and facilitate rapid deployment of a new service.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of a packet processing method according to an embodiment of the present invention;
FIG. 2 is a schematic structural diagram of a CPU according to an embodiment of the present invention;
FIG. 3 is a schematic structural diagram of a packet processing apparatus according to an embodiment of the present invention; and
FIG. 4 is a schematic structural diagram of a packet processing apparatus according to an embodiment of the present invention.

### DESCRIPTION OF EMBODIMENTS

To make the objectives, technical solutions, and advantages of the embodiments of the present invention clearer, the following clearly describes the technical solutions of the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

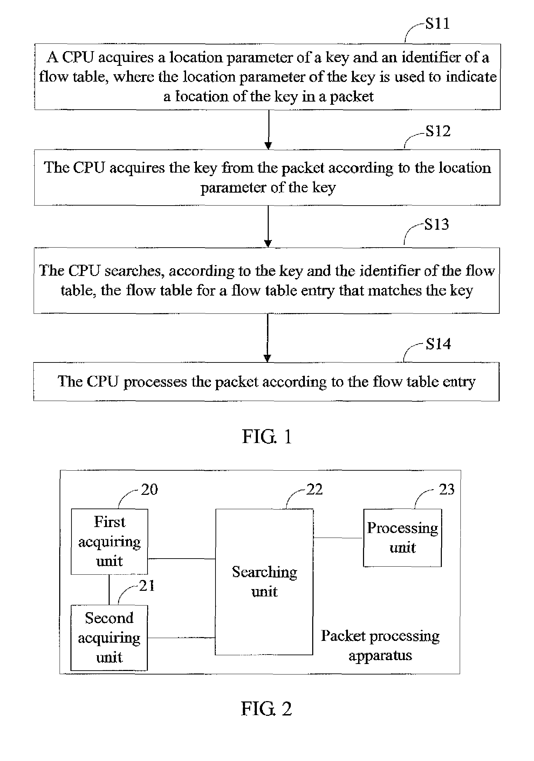

As shown in FIG. 1, a packet processing method provided in an embodiment of the present invention includes:
S11. A CPU acquires a location parameter of a key and an identifier of a flow table, where the location parameter of the key is used to indicate a location of the key in a packet.
   For example, the CPU may acquire the location parameter of the key and the identifier of the flow table from description information of the flow table.
   For example, the identifier of the flow table is used to distinguish different flow tables, and the CPU may access the flow table according to the identifier of the flow table. The identifier of the flow table may be a sequence number of the flow table, or may be a storage location of the flow table or other information that is used to distinguish flow tables. Examples are not given one by one herein for illustration.
   For example, the location parameter of the key includes a first parameter and a second parameter. The first parameter is an offset between a start bit of the key and a header of the packet, and the second parameter is an offset between an end bit of the key and the header of the packet.
   Alternatively, the first parameter is an offset between a start bit of the key and a header of the packet, and the second parameter is a length of the key.
   Alternatively, the first parameter is an offset between an end bit of the key and a header of the packet, and the second parameter is a length of the key.
   In the foregoing technical solution, the start bit of the key may be a most significant bit (most significant bit, MSB for short) of a binary sequence (binary sequence) corresponding to the key, and the end bit of the key may be a least significant bit (least significant bit, LSB for short) of the binary sequence corresponding to the key.
   For example, the key may include only one field (field) in the packet, and may include multiple fields in the packet For example, in a scenario in which the packet is an IP packet, the key may include only a destination IP address in an IP header of the IP packet. For example, in a scenario in which the packet is a Transmission Control Protocol (Transmission Control Protocol, TCP for short) packet, the key may include a source port and a destination port in a TCP header of the TCP packet. The key may further include a source IP address, a destination IP address, and a protocol (protocol) that are in an IP header of the TCP packet.
   Optionally, the key may further include information other than the packet, for example, the key may include information in a register.
   For example, the CPU may be a CPU in a server, or may be a CPU in a personal computer (personal computer, PC for short). In addition, the CPU may be a CPU in a network device, where the network device may be a router, a network switch, a firewall, a load balancer, a wavelength division multiplexing device, a packet transport network device, a base station, a base station controller, or a data center. Specifically, the CPU may be a component on a control plane of the network device, for example, the CPU may be a single-core CPU, or may be a multi-core CPU.
S12. The CPU acquires the key from the packet according to the location parameter of the key.
   For example, the key may be a field in a header (header) of the packet, or may be a data segment (data segment) in a payload (payload) of the packet, and the key may include a field in the header of the packet and a data segment in the payload of the packet.
S 13. The CPU searches, according to the key and the identifier of the flow table, the flow table for a flow table entry that matches the key.
   For example, the CPU may access, according to the identifier of the flow table, the flow table that is corresponding to the identifier and stored in a memory. For example, when the identifier of the flow table is a storage address of the flow table, the CPU may perform an addressing operation by using the identifier of the flow table, so as to access the flow table; when the identifier of the flow table is a sequence number, the CPU may access the flow table according to the sequence number. Specifically, the sequence number may be equal to an array pointer, where the array pointer may point to storage space of the flow table, and the CPU accesses the flow table according to the storage space pointed to by the array pointer.
   For example, the flow table may be any flow table of multiple flow tables that can be accessed by the CPU.
   For example, the flow table and the description information of the flow table may be stored in same storage space. Alternatively, the flow table and the description information of the flow table may be stored in different storage space, for example, the flow table and the description information of the flow table may be stored in one table, or the flow table and the description information of the flow table may be separately stored in different tables.
   For example, the CPU may search, by using a mask match algorithm, a longest prefix match (longest prefix match, LPM for short) algorithm, or an exact match algorithm, the flow table for the flow table entry that matches the key. For example, the CPU may compare, by using the exact match algorithm, the key with a match value included in each flow table entry in the flow table, to acquire the flow table entry in which a match value same as the key is located. Examples of using other algorithms to perform searching are no longer described herein.
   For example, the flow table entry may include one instruction (instruction), and may also include multiple instructions. For example, the instruction may be an instruction or an action defined in the OpenFlow Switch Specification 1.3.0 (OpenFlow Switch Specification 1.3.0) released by the Open Networking Foundation (Open Networking Foundation, ONF). For example, the instruction included in the flow table entry may be a GOTO_TABLE (GOTO_TABLE) instruction, a DROP (DROP) instruction, an OUTPUT (OUTPUT) instruction, or a sending instruction. The sending instruction is used to send the packet to a network device that can communicate with a device to which the CPU belongs, where the network device that can communicate with the device to which the CPU belongs may be a controller, a server, or a switch.
S 14. The CPU processes the packet according to the flow table entry.
   For example, when the flow table entry includes multiple instructions, the CPU may execute the multiple instructions according to a priority of each instruction or location order of each instruction in an instruction sequence in the flow table entry, so as to process the packet. The priority of the instruction is used to indicate time order of executing a corresponding instruction in the multiple instructions, for example, a high-priority instruction is executed before a low-priority instruction.
   For example, the acquired flow table entry to which the CPU responds includes an OUTPUT instruction. The CPU output the packet to another device, where the another device may be a server, a switch, a router, or a PC.

Optionally, before S11, the method may further include: The CPU receives an enabling instruction, where the enabling instruction is an instruction that instructs the CPU to process the packet. For example, the enabling instruction may be a GOTO_TABLE instruction, and the enabling instruction may also be an instruction that instructs the CPU to receive the packet from a port (port), where the enabling instruction may carry an identifier of the port.

For example, the instruction that instructs to process the packet may carry a port number of the port that receives the packet, and the CPU receives the packet from the port corresponding to the port number and executes the foregoing S11 to S14.

For example, when the flow table entry acquired by the CPU includes a GOTO_TABLE instruction, the CPU may access another flow table according to an identifier of the another flow table carried in the GOTO_TABLE instruction, so as to perform packet processing according to the another flow table. The packet processing is similar to that in S11 to S 14.

According to the method in this embodiment, a CPU does not need to identify a data format of a packet, and the CPU may acquire a key from the packet by using a location parameter of the key, and processes the packet according to a flow table entry that is in a flow table and that matches the key; therefore, the CPU may process the packet with no need to understand the data format of the packet. The foregoing technical solution features high flexibility and commonality and facilitates rapid deployment of a new service.

FIG. 2 shows a CPU provided in an embodiment of the present invention, where the CPU may be a CPU in a server, or may be a CPU in a personal computer (personal computer, PC for short). In addition, the CPU may be a CPU in a network device, where the network device may be a router, a network switch, a firewall, a load balancer, a wavelength division multiplexing device, a packet transport network device, a base station, a base station controller, or a data center. Specifically, the CPU may be a component on a control plane of the network device, for example, the CPU may be a single-core CPU, or may be a multi-core CPU. Referring to FIG. 2, the CPU includes: a first acquiring unit 20, a second acquiring unit 21, a searching unit 22, and a processing unit 23.

The first acquiring unit 20 is configured to acquire a location parameter of a key and an identifier of a flow table, where the location parameter of the key is used to indicate a location of the key in a packet.

For example, the first acquiring unit 20 may acquire the location parameter of the key and the identifier of the flow table from description information of the flow table.

For example, the identifier of the flow table is used to distinguish different flow tables, and the first acquiring unit 20 accesses the flow table according to the identifier of the flow table. The identifier of the flow table may be a sequence number of the flow table, or may be a storage location of the flow table or other information that is used to distinguish flow tables. Details are not described herein again.

For example, the location parameter of the key includes a first parameter and a second parameter. The first parameter is an offset between a start bit of the key and a header of the packet, and the second parameter is an offset between an end bit of the key and the header of the packet.

Alternatively, the first parameter is an offset between a start bit of the key and a header of the packet, and the second parameter is a length of the key.

Alternatively, the first parameter is an offset between an end bit of the key and a header of the packet, and the second parameter is a length of the key.

In the foregoing technical solution, the start bit of the key may be an MSB of a binary sequence corresponding to the key, and the end bit of the key may be an LSB of the binary sequence corresponding to the key.

The second acquiring unit 21 is configured to acquire the key from the packet according to the location parameter that is of the key and that is acquired by the first acquiring unit 20. For example, the key may be a field in a header of the packet, or may be a data segment in a payload of the packet, and the key may include a field in the header of the packet and a data segment in the payload of the packet.

The searching unit 22 is configured to search, according to the key acquired by the second acquiring unit 21 and the identifier that is of the flow table and that is acquired by the first acquiring unit 20, the flow table for a flow table entry that matches the key.

For example, the searching unit 22 may access, according to the identifier of the flow table, the flow table that is corresponding to the identifier and stored in a memory, and the flow table may be any flow table of multiple flow tables that can be accessed by the searching unit 22.

For example, the searching unit 22 may search, by using a mask match algorithm, an LPM algorithm, or an exact match algorithm, the flow table for the flow table entry that matches the key. For example, the searching unit 22 may compare, by using the exact match algorithm, the key with a match value included in each flow table entry in the flow table, to acquire the flow table entry in which a match value same as the key is located. Examples of using other algorithms to perform searching are no longer described herein.

The processing unit 23 is configured to process the packet according to the flow table entry found by the searching unit 22. For example, when the flow table entry includes multiple instructions, the processing unit 23 may execute the multiple instructions according to a priority of each instruction or location order of each instruction in an instruction sequence in the flow table entry, so as to process the packet. The priority of the instruction is used to indicate time order of executing a corresponding instruction in the multiple instructions, for example, a high-priority instruction is executed before a low-priority instruction.

Optionally, the CPU further includes a storage unit, where the storage unit is configured to store a flow table resource, and the flow table resource includes the location parameter of the key, the identifier of the flow table, and the flow table.

The CPU provided in the embodiment corresponding to FIG. 2 can be used to execute the method provided in the embodiment corresponding to FIG. 1.

The CPU shown in FIG. 2 may be a CPU of a server or a CPU of a PC.

In the foregoing technical solution, the CPU does not need to identify a data format of a packet; and the CPU may acquire a key from the packet by using a location parameter of the key, and processes the packet according to a flow table entry that is in a flow table and that matches the key; therefore, the CPU may process the packet with no need to understand the data format of the packet. The foregoing technical solution features high flexibility and commonality and facilitates rapid deployment of a new service.

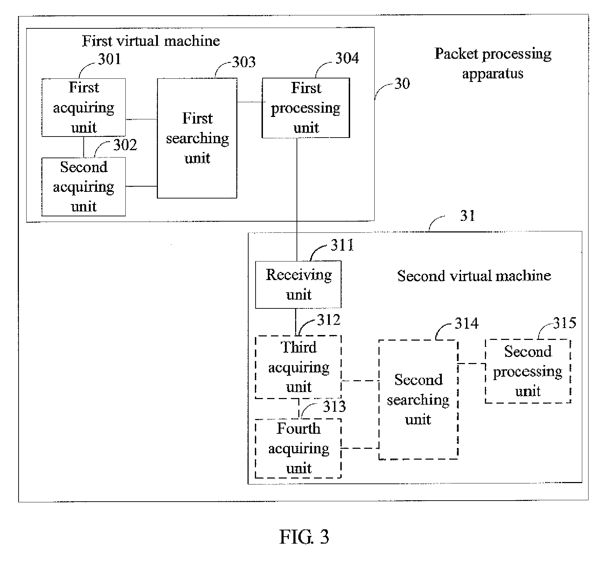

FIG. 3 is a schematic structural diagram of a packet processing apparatus according to an embodiment of the present invention. The packet processing apparatus may be a server, or may be a personal computer. In addition, the packet processing apparatus may be a network device, where the network device may be a router, a network switch, a firewall, a load balancer, a wavelength division multiplexing device, a packet transport network device, a base station, a base station controller, or a data center. Referring to FIG. 3, the packet processing apparatus includes: a first virtual machine 30, and a second virtual machine 31. The first virtual machine 30 in this embodiment may be used to execute the method provided in the embodiment corresponding to FIG. 1.

The first virtual machine 30 includes: a first acquiring unit 301, a second acquiring unit 302, a first searching unit 303, and a first processing unit 304.

The first acquiring unit 301 is configured to acquire a location parameter of a first key and an identifier of a first flow table, where the location parameter of the first key is used to indicate a location of the first key in a packet.

The second acquiring unit 302 is configured to acquire the first key from the packet according to the location parameter that is of the first key and that is acquired by the first acquiring unit 301.

For example, the first key may be a field in a header of the packet, or may be a data segment in a payload of the packet, and the first key may include a field in the header of the packet and a data segment in the payload of the packet.

The first searching unit 303 is configured to search, according to the first key acquired by the second acquiring unit 302 and the identifier that is of the first flow table and that is acquired by the first acquiring unit 301, the first flow table for a flow table entry that matches the first key.

For example, the first searching unit 303 may access, according to the identifier of the first flow table, the first flow table that is corresponding to the identifier of the first flow table and that is stored in a memory included in the packet processing apparatus. The first flow table may be any flow table of multiple flow tables that can be accessed by the searching unit 303.

Optionally, the first searching unit 303 may search, by using a mask match algorithm, an LPM algorithm, or an exact match algorithm, the first flow table for the flow table entry that matches the key.

The first processing unit 304 is configured to process the packet according to the flow table entry that is in the first flow table and that is found by the first searching unit 303, so as to obtain a first packet. For example, when the flow table entry includes multiple instructions, the first processing unit 304 may execute the multiple instructions according to a priority of each instruction or location order of each instruction in an instruction sequence in the flow table entry, so as to process the packet. The priority of the instruction is used to indicate time order of executing a corresponding instruction in the multiple instructions, for example, a high-priority instruction is executed before a low-priority instruction. The first packet may be the same as the packet, for example, the processing the packet by the first processing unit 304 is performing a counting operation on the packet. The first packet may be different from the packet, for example, the processing the packet by the first processing unit 304 is performing a field adding (ADD_FIELD) operation on the packet.

Optionally, the first processing unit 304 is configured to execute, according to the flow table entry that is in the first flow table and that is found by the first searching unit 303, an operation of outputting the first packet to the second virtual machine 31 and an operation of outputting a GOTO_TABLE instruction to the second virtual machine 31, where the GOTO_TABLE instruction includes an identifier of a second flow table.

The second virtual machine 31 includes a receiving unit 311, where the receiving unit 311 is configured to receive the first packet and the GOTO_TABLE instruction that are output by the first virtual machine 30. For example, the receiving unit 311 is configured to receive the first packet and the GOTO_TABLE instruction that are output by the first processing unit 304.

Optionally, the second virtual machine 31 can be used to implement a function similar to that of the CPU provided in the embodiment corresponding to FIG. 1. The second virtual machine 31 further includes: a third acquiring unit 312, a fourth acquiring unit 313, a second searching unit 314, and a second processing unit 315.

The third acquiring unit 312 is configured to: acquire a location parameter of a second key, and acquire the identifier of the second flow table from the GOTO_TABLE instruction, where the location parameter of the second key is used to indicate a location of the second key in the packet.

For example, the location parameter of the second key includes a third parameter and a fourth parameter, where the third parameter is an offset between a start bit of the second key and the header of the packet, and the fourth parameter is an offset between an end bit of the second key and the header of the packet.

Alternatively, the third parameter is an offset between a start bit of the second key and the header of the packet, and the fourth parameter is a length of the second key.

Alternatively, the third parameter is an offset between an end bit of the second key and the header of the packet, and the fourth parameter is a length of the second key.

In the foregoing technical solution, the start bit of the second key may be an MSB of a binary sequence corresponding to the second key, and the end bit of the second key may be an LSB of the binary sequence corresponding to the second key.

The fourth acquiring unit 313 is configured to acquire, according to the location parameter that is of the second key and that is acquired by the third acquiring unit 312, the second key from the first packet received by the receiving unit 311. For example, the second key may be a field in a header of the first packet, or may be a data segment in a payload of the first packet, and the second key may include a field in the header of the first packet and a data segment in the payload of the first packet.

The second searching unit 314 is configured to search, according to the second key acquired by the fourth acquiring unit 313 and the identifier that is of the second flow table and that is acquired by the third acquiring unit 312, the second flow table for a flow table entry that matches the second key. For example, the second searching unit 314 may access, according to the identifier of the second flow table, the second flow table that is corresponding to the identifier of the second flow table and that is stored in a memory included in the packet processing apparatus.

The second processing unit 315 is configured to process the first packet according to the flow table entry that is in the second flow table and that is found by the second searching unit 314. For example, when the flow table entry includes multiple instructions, the second processing unit 315 may execute the multiple instructions according to a priority of each instruction or location order of each instruction in an instruction sequence in the flow table entry, so as to process the first packet. The priority of the instruction is used to indicate time order of executing a corresponding instruction in the multiple instructions, for example, a high-priority instruction is executed before a low-priority instruction.

For example, when the second virtual machine 31 and the first virtual machine 30 may access a same flow table resource, the second virtual machine 31 may process the first packet according to the identifier that is of the second flow table and that is carried in the GOTO_TABLE instruction from the first virtual machine 30, and according to the flow table entry that is found in the second flow table and matches the key. The same flow table resource includes the location parameter of the first key, the identifier of the first flow table, the first flow table, the location parameter of the second key, the identifier of the second flow table, and the second flow table.

Alternatively, the second virtual machine 31 and the first virtual machine 30 may access different flow table resources. Specifically, a flow table resource that may be accessed by the first virtual machine 30 includes the location parameter of the first key, the identifier of the first flow table, and the first flow table; a flow table resource that may be accessed by the second virtual machine 31 includes the location parameter of the second key, the identifier of the second flow table, and the second flow table. The first virtual machine 30 executes an OUTPUT instruction, so as to output the first packet to the second virtual machine 31; after receiving the first packet sent by the first virtual machine 30, the second virtual machine 31 acquires the second key according to the location parameter of the second key, and processes, according to the flow table entry that matches the second key and that is acquired from the flow table corresponding to the identifier of the second flow table, the first packet sent by the first virtual machine 30.

Optionally, the first virtual machine 30 and the second virtual machine 31 may run in a same server or a same PC.

The packet processing apparatus provided by the foregoing technical solution facilitates implementation of deployment of different services on different virtual machines. Each virtual machine separately processes a packet, which is convenient to manage different services. For example, when the first virtual machine 30 processes the first packet, the second virtual machine 31 may process a second packet.

According to the apparatus in this embodiment, a first virtual machine and a second virtual machine do not need to identify a data format of a packet, each virtual machine may acquire a key from the packet by using a location parameter of the key, and processes the packet according to a flow table entry that is in a flow table and that matches the key; therefore, each virtual machine may process the packet with no need to understand the data format of the packet. The foregoing technical solution features high flexibility and commonality and facilitates rapid deployment of a new service.

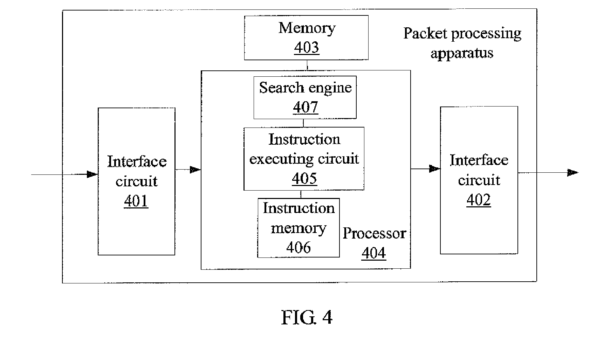

FIG. 4 shows a packet processing apparatus, where the packet processing apparatus may be a server, or may be a personal computer. In addition, the packet processing apparatus may be a network device, where the network device may be a router, a network switch, a fuewall, a load balancer, a wavelength division multiplexing device, a packet transport network device, a base station, a base station controller, or a data center. Referring to FIG. 4, the packet processing apparatus includes an interface circuit 401, an interface circuit 402, a memory 403, and a processor 404, where the processor 404 includes an instruction executing circuit 405, an instruction memory 406, and a search engine 407. The packet processing apparatus in this embodiment may be used in a server or a computer; the packet processing apparatus in this embodiment may be used to implement the packet processing apparatus in the embodiment corresponding to FIG. 2 or FIG. 3; the packet processing apparatus in this embodiment may be used to execute the method provided in the embodiment corresponding to FIG. 1.

The processor 404 is separately coupled with the interface circuit 401, the interface circuit 402, and the memory 403, and the instruction executing circuit 405 is separately coupled with the instruction memory 406 and the search engine 407.

The instruction memory 406 is configured to store a computer instruction, and the instruction executing circuit 405 is configured to execute the following operations by reading the computer instruction:
triggering the search engine 407, so as to enable the search engine 407 to acquire a location parameter of a key and an identifier of a flow table from the memory 403, where the location parameter of the key is used to indicate a location of the key in a packet;
acquiring, according to the location parameter of the key, the key from the packet received from the interface circuit 401;
triggering the search engine 407, so as to enable the search engine 407 to search, according to the key and the identifier of the flow table, the flow table in the memory 403 for a flow table entry that matches the key; and
processing the packet according to the flow table entry.

For example, the packet is received by the packet processing apparatus by using the interface circuit 401.

Optionally, the processor 404 may execute an operation of outputting the packet and an operation of outputting a GOTO_TABLE instruction by using the interface circuit 402.

The foregoing general purpose processor may be a microprocessor or the processor may also be any conventional processor. Steps of the methods disclosed with reference to the embodiments of the present invention may be directly executed and accomplished by means of a hardware processor, or may be executed and accomplished by using a combination of hardware and software modules in the processor. When it is implemented by using software, code that implements the foregoing functions may be stored in a computer-readable medium, where the computer-readable medium includes a computer storage medium, and the storage medium may be any available medium accessible to a computer. The following is taken as an example but is not limited: The computer-readable medium may be a random access memory (random access memory, RAM for short), a read-only memory (read only memory, ROM for short), an electrically erasable programmable read-only memory (electrically erasable programmable read-only memory, EEPROM for short), a compact disc read-only memory (compact disc-read only memory, CD-ROM for short), or other optical disk storage, a disk storage medium or other disk storage devices, or any other medium that can be used to carry or store expected program code in a command or data structure form and can be accessed by a computer. The computer-readable medium may be a compact disc (compact disk, CD for short), a laser disc, an optical disc, a digital video disc (digital video disc, DVD for short), a floppy disk, or a Blu-ray disc.

In summary, what is described above is merely exemplary embodiments of the technical solutions of the present invention, but is not intended to limit the protection scope of the present invention. Any modification, equivalent replacement, or improvement made without departing from the principle of the present invention shall fall within the protection scope of the present invention.

## Claims

1. A packet processing method, wherein the method comprises:
acquiring, by a central processing unit, CPU, a location parameter of a key and an identifier of a flow table, wherein the location parameter of the key is used to indicate a location of the key in a packet;
acquiring, by the CPU, the key from the packet according to the location parameter of the key;
searching, by the CPU according to the key and the identifier of the flow table, the flow table for a flow table entry that matches the key; and
processing, by the CPU, the packet according to the flow table entry.

2. The method according to claim 1, wherein the location parameter of the key comprises a first parameter and a second parameter, wherein
the first parameter is an offset between a start bit of the key and a header of the packet, and the second parameter is an offset between an end bit of the key and the header of the packet; or
the first parameter is an offset between a start bit of the key and a header of the packet, and the second parameter is a length of the key; or
the first parameter is an offset between an end bit of the key and a header of the packet, and the second parameter is a length of the key.

3. A packet processing apparatus, wherein the apparatus comprises a first virtual machine, wherein:
the first virtual machine comprises:
a first acquiring unit, configured to acquire a location parameter of a first key and an identifier of a first flow table, wherein the location parameter of the first key is used to indicate a location of the first key in a packet;
a second acquiring unit, configured to acquire the first key from the packet according to the location parameter that is of the first key and that is acquired by the first acquiring unit;
a first searching unit, configured to search, according to the first key acquired by the second acquiring unit and the identifier that is of the first flow table and that is acquired by the first acquiring unit, the first flow table for a flow table entry that matches the first key; and
a first processing unit, configured to process the packet according to the flow table entry that is in the first flow table and that is found by the first searching unit, so as to obtain a first packet.

4. The apparatus according to claim 3, wherein the location parameter of the first key comprises a first parameter and a second parameter, wherein
the first parameter is an offset between a start bit of the first key and a header of the packet, and the second parameter is an offset between an end bit of the first key and the header of the packet; or
the first parameter is an offset between a start bit of the first key and a header of the packet, and the second parameter is a length of the first key; or
the first parameter is an offset between an end bit of the first key and a header of the packet, and the second parameter is a length of the first key.

5. The apparatus according to claim 3 or 4, wherein the apparatus further comprises a second virtual machine, wherein
the first processing unit is specifically configured to execute an operation of outputting the first packet to the second virtual machine and an operation of outputting a GOTO_TABLE, GOTO_TABLE, instruction to the second virtual machine, wherein the GOTO_TABLE instruction comprises an identifier of a second flow table; and
the second virtual machine comprises a receiving unit which is configured to receive the first packet and the GOTO_TABLE instruction that are output by the first virtual machine.

6. The apparatus according to claim 5, wherein the second virtual machine further comprises:
a third acquiring unit, configured to: acquire a location parameter of a second key, and acquire the identifier of the second flow table from the GOTO_TABLE instruction, wherein the location parameter of the second key is used to indicate a location of the second key in the packet;
a fourth acquiring unit, configured to acquire, according to the location parameter that is of the second key and that is acquired by the third acquiring unit, the second key from the first packet received by the receiving unit;
a second searching unit, configured to search, according to the second key acquired by the fourth acquiring unit and the identifier that is of the second flow table and that is acquired by the third acquiring unit, the second flow table for a flow table entry that matches the second key; and
a second processing unit, configured to process the first packet according to the flow table entry that is in the second flow table and that is found by the second searching unit.

7. The apparatus according to claim 6, wherein the location parameter of the second key comprises a third parameter and a fourth parameter, wherein
the third parameter is an offset between a start bit of the second key and the header of the packet, and the fourth parameter is an offset between an end bit of the second key and the header of the packet; or
the third parameter is an offset between a start bit of the second key and the header of the packet, and the fourth parameter is a length of the second key; or
the third parameter is an offset between an end bit of the second key and the header of the packet, and the fourth parameter is a length of the second key.

8. a central processing unit, wherein the central processing unit comprises:
a first acquiring unit, configured to acquire a location parameter of a key and an identifier of a flow table, wherein the location parameter of the key is used to indicate a location of the key in a packet;
a second acquiring unit, configured to acquire the key from the packet according to the location parameter that is of the key and that is acquired by the first acquiring unit;
a searching unit, configured to search, according to the key acquired by the second acquiring unit and the identifier that is of the flow table and that is acquired by the first acquiring unit, the flow table for a flow table entry that matches the key; and
a processing unit, configured to process the packet according to the flow table entry found by the searching unit.

9. The central processing unit according to claim 8, wherein the location parameter of the key comprises a first parameter and a second parameter, wherein
the first parameter is an offset between a start bit of the key and a header of the packet, and the second parameter is an offset between an end bit of the key and the header of the packet; or
the first parameter is an offset between a start bit of the key and a header of the packet, and the second parameter is a length of the key; or
the first parameter is an offset between an end bit of the key and a header of the packet, and the second parameter is a length of the key.
